Europäisches Patentamt

European Patent Office

Office européen des brevets

(11) Veröffentlichungsnummer: **0 484 696 A2**

# (12) EUROPÄISCHE PATENTANMELDUNG

(21) Anmeldenummer: **91117485.2**

(22) Anmeldetag: **14.10.91**

(51) Int. Cl.⁵: **F23D 14/58**, F23D 21/00, C03B 37/018, C03B 23/043, F23D 14/32

(30) Priorität: **08.11.90 DE 4035502**
**28.11.90 DE 4037751**
**22.02.91 DE 4105608**

(43) Veröffentlichungstag der Anmeldung:
**13.05.92 Patentblatt 92/20**

(84) Benannte Vertragsstaaten:
**CH DE DK FR GB IT LI NL**

(71) Anmelder: **kabelmetal electro GmbH**
**Kabelkamp 20 Postfach 260**
**W-3000 Hannover 1(DE)**

(72) Erfinder: **Keim, Norbert**
**Mergenthalerstrasse 21**
**W-7120 Bietigheim-Biss.(DE)**
Erfinder: **Görner, Klaus, Dr.**
**Dürnauerweg 32**
**W-7000 Stuttgart 70(DE)**
Erfinder: **Käss, Martin**
**Ludwigstrasse 87 B**
**W-7000 Stuttgart 1(DE)**

(54) **Brennerkopf für Gasbrenner.**

㊼ Ein Brennerkopf für Gasbrenner mit einer Anzahl Gasauslaßdüsen zur Temperaturbehandlung von Profilen, insbesondere zur Temperaturbehandlung von langgestreckten Profilen, bei der eine Relativbewegung zwischen diesen und dem Brennerkopf stattfindet, weist Gasauslaßdüsen (2, 3) auf, die in einer allen Düsen gemeinsamen Ebene (4) enden, in der durch die räumliche Zuordnung der Düsenauslässe (2, 3) zueinander von diesen ein rechteckförmiges Flächenstück der Ebene erfaßt wird.

EP 0 484 696 A2

Rank Xerox (UK) Business Services
(-/2.18/2.0)

Die vorliegende Erfindung betrifft einen Brennerkopf für Gasbrenner mit einer Anzahl Gasauslaßdüsen zur Temperaturbehandlung von Profilen, insbesondere zur Temperaturbehandlung von langgestreckten Profilen, bei der eine Relativbewegung zwischen diesen und dem Brennerkopf stattfindet.

Gasbrenner der gattungsgemäßen Art sind seit langem im Einsatz, mit den entsprechenden Gasen, z. B. Wasserstoff und Sauerstoff, gespeist, können hohe Betriebstemperaturen für die Behandlung des jeweiligen Gutes erreicht werden. In Abhängigkeit von der äußeren Form oder den äußeren Abmessungen der zu behandelnden Profile weisen die jeweiligen Brennertypen unterschiedliche Formen und Abmessungen auf, so können die Brenner als sogenannte Halbschalenringbrenner ausgeführt sein, es können aber auch Vollringbrenner mit oder ohne radialen Schutzschleier sowie sogenannte Freistrahlbrenner sein, bei denen der Sauerstoff mit hoher Geschwindigkeit aus den einzelnen Düsen der Brennerköpfe austritt. Dabei können die Brennerköpfe, aber auch die Düsen, jeweils drehbar, schwenkbar und in ihren Abständen zueinander veränderbar sein. Letztere Möglichkeit liefert auch ein bekannter Gasbrenner (DE-PS 34 00 710), der insbesondere zum Beheizen von Glasrohren bei der Herstellung von Vorformen für optische Glasfasern dient. Die bei diesem bekannten Brenner vorgesehene Verschiebung der einzelnen Brennerköpfe relativ zueinander sowie die Ausrichtung auf die Drehachse des zu behandelnden Glaskörpers sollen die Möglichkeit geben, breite oder schmale Heizzonen vorzusehen, um den Anforderungen der Glasfaserherstellungstechnik zu genügen.

Nachteilig bei diesem bekannten Brenner aber auch bei allen vorerwähnten ist, daß durch den mit der Konstruktion der bekannten Brennertypen vorgegebenen Öffnungswinkel eine enge Begrenzung und eine scharfe Berandung der Heizzonen nicht möglich sind. Auf enge Temperaturgrenzen kommt es aber an, wenn z. B. Bereiche eines Metallbandes kontinuierlich während einer Temperaturbehandlung einem Glühprozeß unterworfen werden sollen, oder wie zu dem genannten Patent bereits angedeutet, für die jeweiligen Verfahrensschritte bei der Glasfaserherstellung breite oder schmale Heizzonen erforderlich sind.

Ausgehend von diesem Stand der Technik liegt der Erfindung die Aufgabe zugrunde, eine Möglichkeit zu finden, bei einem Brennerkopf der gattungsgemäßen Art bestimmte, dem jeweiligen Verwendungszweck des Gasbrenners angepaßte Temperaturprofile zu gewährleisten.

Gelöst wird diese Aufgabe gemäß der Erfindung bei einem Brennerkopf für Gasbrenner dadurch, daß die Gasauslaßdüsen in einer allen Düsen gemeinsamen Ebene enden, in der durch die räumliche Zuordnung der Düsenauslässe zueinander von diesen ein rechteckförmiges Flächenstück der Ebene erfaßt wird. Mit einem so ausgebildeten Brennerkopf können bisher übliche Warmbehandlungsverfahren optimiert werden, wobei durch die mit der Erfindung erreichte Minimierung des Öffnungsdurchmessers der Düsen der Gasdurchsatz für den Betrieb des Brenners reduziert werden kann. Das ist interessant insbesondere für alle die Vorgänge, wo bei der Temperaturbehandlung von langgestreckten Profilen mit langen Betriebszeiten gerechnet werden muß. Das gilt insbesondere auch für die Herstellung von Glasfasern aus sogenannten Vorformen, bei der das Kernglasmaterial durch chemische Niederschlagung aus der Gasphase auf der Innenwand eines Glasrohres aufgebracht, das innenbeschichte Glasrohr durch Temperaturbehandlung zum Kollabieren gebracht und die so hergestellte Vorform schließlich zur Glasfaser ausgezogen wird.

Will man in einem solchen Fall z. B. die Qualität der Vorform verbessern und die Fertigungsgeschwindigkeit erhöhen, kann man entsprechend einem früheren Vorschlag die Temperaturbehandlung zum Kollabieren längs des Glasrohres entsprechend einem Temperaturprofil vornehmen, das durch einen längs des behandelten Glasrohrabschnittes oberen Bereich maximaler Glastemperatur und einem Bereich Glaserweichungstemperatur bestimmt ist, wobei der Bereich maximaler Glastemperatur ein weitgehend gleichmäßiges Temperaturniveau aufweist mit einer Breite längs des Glasrohrabschnittes, die der Breite des Bereiches Glaserweichungstemperatur angenähert ist. Für diesen Anwendungsbereich liefert der gemäß der Erfindung ausgebildete Brenner optimale Voraussetzungen, da die für das sogenannte Brennerprofil wesentliche Plateauhöhe, die Plateaubreite sowie die Stabilitätsweite in engen Temperaturgrenzen einstellbar ist.

In Durchführung der Erfindung hat es sich als besonders vorteilhaft erwiesen, wenn die Gasauslaßdüsen für die Mischungskomponenten unterschiedliche geometrische Formen und/oder Abmessungen mindestens im Gasauslaßbereich aufweisen. Hierdurch ist es möglich, eine einwandfreie Einmischung oder Durchmischung der Gaskomponenten, wie z. B. Wasserstoff und Sauerstoff, durchzuführen und so optimale Betriebsbedingungen zu schaffen. Das gilt insbesondere dann, wenn als äußere Längsbegrenzung des Flächenstückes Gasauslaßdüsen in Form von Schlitzen für die eine Mischungskomponente dienen, zwischen denen Bohrungen als Gasauslaßdüsen für die zweite Mischungskomponente angeordnet sind. Tritt etwa durch die schlitzförmige Düse der Wasserstoff aus dem Brennerkopf aus und durch die Bohrungen zwischen den beiden Schlitzen der Sauerstoff, dann sind, bedingt durch die höhere Dichte und den gewählten hohen Impulsstrom des Sauerstoffes dessen Einzelstrahlen dominant beim Mischvorgang zwischen den beiden Komponenten, bei dem der Wasserstoff eingemischt wird und das zündfähige Gemisch bildet.

Sind, wie nach einem weiteren Erfindungsgedanken vorgesehen, die Bohrungen im Grundkörper als Gasauslaßdüsen für die eine Komponente in Reihen parallel zu den seitlichen Schlitzen für die andere Mischungskomponente angeordnet, dann kann man vorteilhaft die Teilung der Bohrungen in Längsrichtung unterschiedlich wählen. Auf diese Weise ist es möglich, entsprechend den Erfordernissen bezogen auf das jeweils zu behandelnde Profil sowie den vorliegenden Abstand zwischen Brenner und Produkt die jeweils günstigste Brennweite einzustellen. So läßt sich eine Temperaturkonstanz über die gesamte Plateaubreite des Temperaturprofils sicherstellen. Beispielsweise kann man zu diesem Zweck die Abstände zwischen jeweils zwei Bohrungen von der Mitte der Längsschlitze aus gesehen zunächst zu- und zum Ende der Längsschlitze hin wieder abnehmen lassen.

Eine besonders vorteilhafte Ausführungsform der Erfindung ergibt sich dann, wenn der Brennerkopf aus einem Grundkörper mit Bohrungen als Gasauslaßdüsen und zwei gesonderten Seitenteilen besteht, die mit dem Grundkörper zusammenfügbar sind und im zusammengefügten Zustand zwischen sich und den korrespondierenden Flächen des Grundkörpers die schlitzförmigen Gasauslaßdüsen einschließen. Diese Konstruktion bedingt, daß der Öffnungswinkel der Flamme in beiden Richtungen sehr gering und damit die Flammenhüllfläche sehr scharf ist. Auf diese Weise sind hohe Temperaturgradienten zu erreichen, die insbesondere bei den angesprochenen rechteckförmigen Temperaturprofilen bei der Herstellung von Glasfasern zur Übertragung optischer Signale gefordert werden.

Der Grundkörper und die Seitenteile sind vorteilhaft miteinander verschweißt, so daß ein einheitlicher Brennerkopf entsteht. Durch die Mehrteiligkeit des Brennerkopfes ist eine hohe Präzision bei der Herstellung der Bohrungen, der Schlitze sowie der Zuführungskanäle möglich, so daß optimale Voraussetzungen für einen guten Gasdurchsatz geschaffen werden.

In Weiterführung der Erfindung wird man den Grundkörper zweckmäßig als im Querschnitt T-förmiges Profil ausbilden, in dessen beiderseitige Ausnehmungen die als Platten ausgebildeten Seitenteile zur Vervollständigung eines im Querschnitt rechteckförmigen Brennerkopfes integrierbar sind. In dem breiten Teil des Grundkörpers sind dabei die Zuführungsbohrungen für die beiden Gaskomponenten vorgesehen, während im schmalen Teil des T-förmigen Profiles die Bohrungen für den Durchtritt des Sauerstoffes angeordnet sind.

Die an der der Düsenaustrittsfläche gegenüber liegenden Seite des Brennerkopfes angeordneten Zuführungen für die Mischungskomponenten enden in gegenüber den Abmessungen der Schlitze sowie der Bohrungen großvolumigen Kammern, von denen aus die Bohrungen und Schlitze nach außen führen. Die Großvolumigkeit der Zufuhr- und Verteilerkanäle für die beiden Komponenten, insbesondere Wasserstoff und Sauerstoff, wurden deshalb möglichst großvolumig und mit definierten Engstellen ausgeführt, um einen geringen Druckverlust in den Verteilkanälen und einen großen Druckverlust in den Verengungen einzustellen, und um damit für alle Bohrungen bzw. den gesamten Schlitz gleichmäßige Druckverluste und Ausströmverhältnisse sicherzustellen. Die Qualität der gezündeten Flamme kann damit weiter verbessert werden.

Die Ausbildung des erfindungsgemäßen Brennerkopfes als im Querschnitt T-förmiges Profil mit integrierbaren Seitenteilen hat den weiteren Vorteil, daß die Bohrungen für den Sauerstoff sehr gut fluchtend hergestellt und mit hoher Oberflächengüte und ohne Abrißkanten gefertigt werden können. Damit ist ein hoher Impulsstrom des Sauerstoffes möglich, dessen Einzelstrahlen maßgeblich an dem Mischvorgang zwischen Wasserstoff und Sauerstoff beteiligt sind. In diesem Zusammenhang hat es sich auch als zweckmäßig erwiesen, wenn die Austrittquerschnitte für den Wasserstoff und den Sauerstoff so gewählt sind, daß ein Geschwindigkeitsverhältnis

$$H_2/O_2 = 1/3$$

erreicht ist.

Wesentlich für den erfindungsgemäßen Brennerkopf ist auch, daß durch den mechanischen Aufbau Mittel vorgesehen werden können, die Strömung der Gaskomponenten bis zu den Austritts- oder Auslaßdüsen zu steuern, um so die Flammenqualität zu optimieren. Ein weiterer Schritt ist der, daß in Weiterführung des Erfindungsgedankens die als Platten ausgebildeten Seitenteile einen längsverlaufenden Steg aufweisen, der durch Zusammenfügen des jeweiligen Seitenteiles mit dem Grundkörper eine obere und eine untere Kammer für die eine Mischungskomponente bildet, wobei die räumliche Verbindung zwischen den beiden Kammern durch einen zwischen Steg und Grundkörper verbleibenden längs verlaufenden Schlitz erfolgt. Dabei ist die Außenkante des Austrittsquerschnittes zweckmäßig mit einer auf die Flammenachse gerichteten konischen Fläche versehen. Auf diese Weise ist es möglich, dem hier strömenden Gas vor dem Austritt aus der eigentlichen Düse eine zusätzliche, auf die Flammenachse gerichtete Geschwindigkeitskomponente zu verleihen.

Wie ausgeführt, ist der erfindungsgemäße Brenner für die unterschiedlichsten technischen Gebiete einsetzbar, sinnvoll aber vor allem dort, wo es darauf ankommt, die Temperaturbehandlung mittels einer deutlich in ihren äußeren Abmessungen festgelegten Brennerflamme vorzunehmen. Ein spezielles Anwendungsgebiet dabei ist die Herstellung einer Vorform für Glasfaserlichtwellenleitern, und hierbei insbesondere die Temperaturbehandlung, wie sie in einer älteren Anmeldung P 40 20 101.5 beschrieben ist. Es hat sich nämlich gezeigt, daß zur Verringerung der Kollabierzeit und zur Verbesserung der Produktqualität ein möglichst rechteckförmiges Temperaturprofil benötigt wird. Hierzu schafft der erfindungsgemäße Brenner die besten Voraussetzungen. So ergibt sich eine wesentliche Zeitersparnis beim Einsatz erfindungsgemäßer Brennerköpfe gegenüber bekannten Anordnungen. Das gilt insbesondere für solche Fertigungsprozesse, bei denen große Längen ohne Unterbrechung gefahren werden. Aber auch der Durchsatz an Verbrennungsgasen wird erheblich verringert, ohne daß dies zu einer Verlängerung der Kollabierzeit führt. Darüberhinaus ergibt die Kollabierzeit Reserve aufgrund des Profilvergleiches eine Zeitersparnis, so daß der Energieverbrauch ebenfalls vermindert wird.

Was die Einstellzeit des Brenners betrifft, kann diese gegenüber allen bekannten Brennertypen wesentlich vermindert werden, abgesehen davon, daß die spezielle Anordnung der Austrittsdüsen für die Mischungskomponenten zu einem minimalen Abbrand an den Düsen führt.

Wie ausgeführt, ergeben sich bei der Herstellung von Glasfasern aus sogenannten Vorformen, bei der das Kernglasmaterial durch chemische Niederschlagung aus der Gasphase auf der Innenwand eines Glasrohres aufgebracht, das innen beschichtete Glasrohr durch Temperaturbehandlung zum Kollabieren gebracht und die so hergestellte Vorform zur Glasfaser ausgezogen wird. Für diesen Anwendungsbereich liefert der vorgeschlagene Brenner optimale Voraussetzungen, da die für das sogenannte Brennerprofil, das ist der Temperaturverlauf über einen bestimmen Längenabschnitt des zu behandelnden Glasrohres (Temperaturprofil), wesentliche Plateauhöhe, die Plateaubreite sowie die Stabilitätsbreite in engen Temperaturgrenzen einstellbar ist. Die Anordnung von Schlitzen als Gasauslaßdüsen für den Wasserstoff und die Bohrungen als solche für den Sauerstoff führen zu einer problemlosen Ein- oder Durchmischung der beiden Gaskomponenten, so daß optimale Betriebsbedingungen erreicht werden. Denn infolge der höheren Dichte des Sauerstoffes gegenüber dem Wasserstoff und dem gewählten hohen Impulsstrom des Sauerstoffes sind dessen Einzelstrahlen beim Mischvorgang der beiden Komponenten dominant.

Eine weitere Verbesserung ergibt sich in Durchführung der Erfindung dadurch, daß zwischen den Bohrungen für die zweite Mischungskomponente mindestens eine Reihe weiterer Gasauslaßdüsen für die zweite Mischungskomponente des Gasgemisches angeordnet ist. Diese Maßnahme führt zu einer noch günstigeren Vorvermischung der beiden Gaskomponenten, und damit zur Erhöhung der Brennertemperatur, da die Energie aus den strömenden Gasen Wasserstoff und Sauerstoff in der Strömungszone konzentriert wird. Für das Temperatur- bzw. Brennerprofil bedeutet die Erfindung eine weitere Vergleichmäßigung des oberen Temperaturplateaus, bisher teilweise auftretende Einbrüche im oberen Temperaturniveau sind vermieden.

Die weiteren Gasauslaßdüsen können längsverlaufende, zu den Längsschlitzen für die erste Mischungskomponente bzw. den Bohrungen parallel angeordnete Längsschlitze sein. Diese weiteren Längsschlitze können aber auch unterbrochen sein, so daß sich in Richtung der hintereinander angeordneten Bohrungen gesehen eine Reihe von in Abständen angeordnete Längsschlitze kleinerer Länge ergeben. Bereits diese letzte Maßnahme führt zu einer Verbesserung der Vormischung durch die höhere Austrittsgeschwindigkeit des Wasserstoffes, sie wird weiter verbessert, wenn in Weiterführung des Erfindungsgedankens die Gasauslaßdüsen auch für die erste Mischungskomponente als Bohrungen ausgebildet sind. Vorteilhaft für die Vormischung ist es in diesem Zusammenhang, daß die Abstände der Bohrungen für die erste Mischungskomponente untereinander von denen der Bohrungen für die zweite Mischungskomponente unabhängig sind.

In Weiterführung der Erfindung enden die weiteren Gasauslaßdüsen für die erste Mischungskomponente am der Austrittsebene abgekehrten Ende in einer großvolumigen Kammer. Wie bereits erläutert, dient diese Maßnahme im Zusammenhang mit definierten Engstellen in der Gasführung dazu, bei geringem Druckverlust in den Verteilerkanälen und großem Druckverlust in den Verengungen einen für alle Bohrungen bzw. Schlitze gleichmäßigen Druckverlust und gleichmäßiger Ausströmverhältnisse sicherzustellen. Die Qualität der gezündeten Flamme kann damit weiter verbessert werden.

Eine weitere Möglichkeit, die Mischung der beiden Gaskomponenten zu optimieren und für eine Konzentrierung der Brennerflamme zu sorgen, ergibt sich dann, wenn in Weiterführung der Erfindung im Bereich der Gasauslaßdüsen gesonderte Umlenkflächen für den Gasstrom vorgesehen sind.

Diese Umlenkflächen, etwa in Form die Brennerfläche begrenzende, dachartig nach innen weisende Führungsfläche führen zu einer Vorvermischung der austretenden Gaskomponenten und damit zu einer Vestärkung der Mischzeit.

Die räumliche Verteilung der ersten Mischungskomponente auf die längs des Brennerkopfes angeordneten Schlitze bzw. auf die zwischen den Bohrungen für die zweite Komponente angeordneten Bohrungen oder Schlitze für die erste Mischungskomponente kann z. B. dadurch erfolgen, daß die weiteren Gasauslaßdüsen, Schlitze oder Bohrungen, von gesonderten, an den Brennerkopf anschließbaren Gaszuführungsleitungen gespeist werden. Es ist aber auch möglich und trägt zur Kompaktheit des erfindungsgemäßen Brenners bei, wenn die weiteren Gasauslaßdüsen von den gleichen Gaszuführungsleitungen wie die schlitzförmigen Gasauslaßdüsen gespeist werden, wobei die Aufteilung der beiderseitigen Gasströmungen im Innern des Brennerkopfes erfolgt. Dabei kann die Aufteilung der beiderseitigen Gasströmungen im Innern des Brennerkopfes z. B. 90 % zu 10 % betragen, d. h. der Hauptteil des verwendeten Wasserstoffes z. B. wird durch die längs des Brennerkopfes verlaufenden äußeren Schlitze der Flamme zugeführt.

Praktiziert werden Verfahren zur Herstellung einer Vorform für Glasfaser-Lichtwellenleiter mit einem Kern und einem ein- oder mehrschichtigen Mantel, bei dem das Kernglasmaterial durch chemische Niederschlagung aus der Gasphase auf der Innenwand eines Glasrohres aufgebracht, das innenbeschichtete Glasrohr durch Temperaturbehandlung zum Kollabieren gebracht und diese Vorform schließlich zur Glasfaser ausgezogen wird. Die Temperaturbehandlung zum Beschichten längs des Glasrohres erfolgt dabei entsprechend einem Temperaturprofil mit breiter Temperaturverteilung, das durch einen längs des behandelten Glasrohrabschnittes oberen Bereich maximaler Reaktionstemperatur sowie darunter liegende breitere Bereiche Sintertemperatur und Vorwärmung der gasförmigen Chemikalien bestimmt wird, wobei die einzelnen Bereiche in ihrer Breite zueinander veränderbar sind. Eine solche Temperaturverteilung ermöglicht optimale Betriebsbedingungen, da zum Beschichten eine Vorwärmung der Chemikalien unterhalb der niedrigsten Reaktionstemperatur erfolgt und innerhalb der Endvorwärmstrecke die Gase bis auf maximale Reaktionstemperatur gebracht werden. Im Bereich dieser breiten heißen Zone läuft eine vollständige Reaktion mit homogener Partikelbildung ab, und schließlich sorgt die Breite des Bereiches, in dem Sintertemperatur herrscht, für eine gleichmäßige Versinterung der an der Rohrinnenwand abgeschiedenen Partikel.

Für die hier notwendige Temperaturbehandlung sind die erfindungsgemäßen Brenner besonders geeignet. Sie ermöglichen ein Temperaturprofil, das durch im Querschnitt rechteckförmige Flammenprofile erzeugt wird. Diese Maßnahme führt zu einem noch effektiveren Chemikalienumsatz, die Abscheiderate innerhalb des Glasrohres wird erhöht, die Sinterung der Partikel verbessert. Hinzu kommt, daß auf diese Weise der Brennstoffverbrauch reduziert und die Temperaturprofilcharakteristik über die gesamte Vorformlänge konstant gehalten werden kann.

Zur Wärmebehandlung werden in Achsrichtung des Glasrohres verfahrbare Gasbrenner aus einer Anzahl Düsen enthaltender Brennerköpfe verwendet. Hier sieht die Erfindung vor, daß von den Brennerköpfen innerhalb des Brenners von insgesamt drei je zwei seitlich zum Rohr sowie einander gegenüber und einer unterhalb des Rohres angeordnet ist, wobei die Brennflächen in Achsrichtung des Rohres verlaufen und rechteckförmig ausgebildet sind. Diese Maßnahme erlaubt den Einsatz weniger Brennerköpfe, die Einstellzeit wird reduziert, die Reproduzierbarkeit des gewünschten Temperaturprofils ist jederzeit gewährleistet. Dadurch, daß die gemäß der Erfindung verwendeten Brennerköpfe aus temperatur- und zunderbeständigem metallischem Werkstoff, z. B. Edelstahl, gefertigt sind, ergibt sich gegenüber den bekannten Glasbrennern eine höhere Betriebssicherheit.

In Weiterführung des Erfindungsgedankens ist der unterhalb des Glasrohres angeordnete Brenner in Achsrichtung vor den beiden seitlichen Brennern angeordnet. Hierdurch ist sichergestellt, daß die Rohrtemperatur gehalten und die einströmenden Gase wirksam vorgewärmt werden.

Für die Erfindung kommt es darauf an, daß das gewünschte Temperaturprofil während des Beschichtungsprozesses eingehalten und der Temperaturverlauf optimiert, d. h. Temperaturschwankungen, Sprünge und dergleichen ausgeglichen sind. Hier trägt nach einem weiteren Erfindungsgedanken dazu bei, daß die in Achsrichtung einander zugekehrten Kanten der Brennerköpfe in einer Ebene liegen.

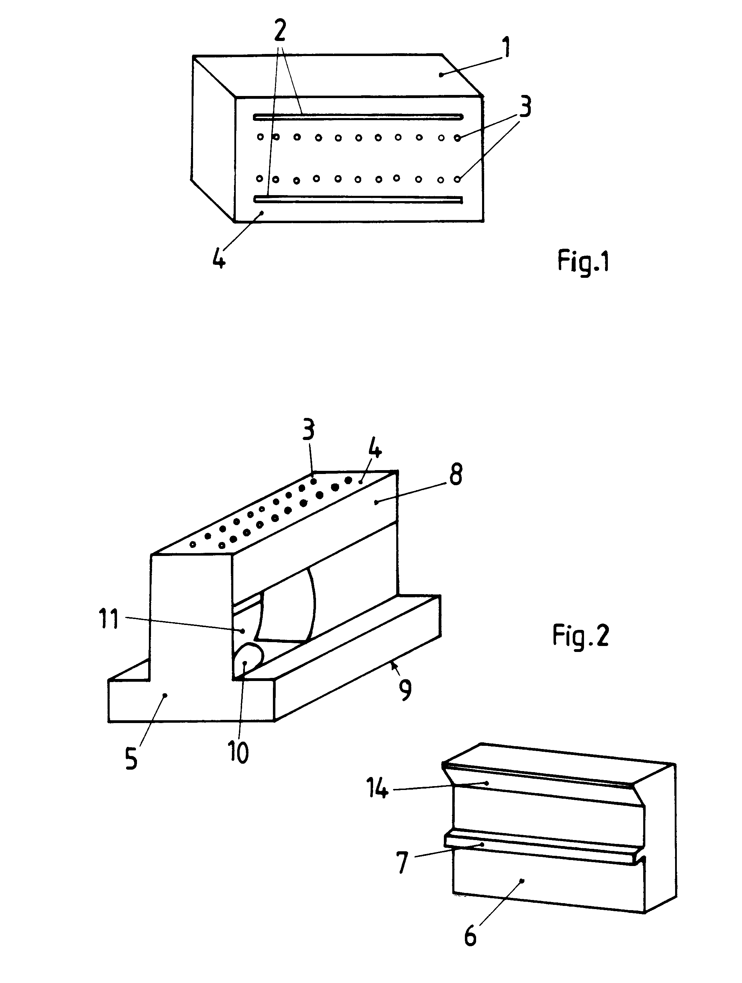

Die Erfindung sei anhand der in den Figuren 1 bis 11 dargestellten Ausführungsbeispiele näher erläutert.

Die Fig. 1 zeigt einen erfindungsgemäßen Brennerkopf 1 in perspektivischer Ansicht, der beispielsweise mit Wasserstoff ($H_2$) und Sauerstoff ($O_2$) betrieben wird. Als Gasauslaßdüsen für den Wasserstoff sind die längs verlaufenden Schlitze 2 vorgesehen, während der Sauerstoff durch die zwischen den Schlitzen in Längsrichtung hintereinander angeordneten Bohrungen 3 austritt. Der Wasserstoff wird in den Sauerstoff eingemischt, so daß oberhalb der allen Düsen gemeinsamen Ebene 4 das zündfähige Gasgemisch entsteht. Durch die Anordnung der Düsen 2 und 3 entsteht ein rechteckförmiges Flammenprofil mit engen Temperaturgrenzen.

Die Fig. 2, ebenfalls in perspektivischer Ansicht, zeigt den im Querschnitt T-förmigen Grundkörper 5 des Brennerkopfes 1 mit den an der oberen Begrenzungsfläche vorgesehenen Bohrungen 3 für den Durchtritt des Sauerstoffes. Vervollständigt zum im Querschnitt rechteckförmigen Brennerprofil wird das dargestellte T-Profil durch je zwei plattenförmige Seitenteile 6, die mit dem T-förmigen Profil 5 an den Seitenkanten verschweißt werden. Ein mittlerer Steg 7 an den Innenflächen der Seitenelemente 6 reicht nach dem Zusammenfügen des T-förmigen Grundkörpers 5 und der Seitenelemente 6 nicht bis an die Seitenfläche 8 des T-förmigen Grundkörpers heran, so daß im Bereich des Steges 7 ein längs verlaufender enger Spalt gebildet wird, der auf das durchströmende Wasserstoffgas eine Düsenwirkung ausübt und das Gas zum Schlitz 2 zu zusätzlich beschleunigt. Die vor und hinter dem Steg 7 gebildeten Verteilkammern bewirken in Verbindung mit dem durch den Steg 7 induzierten Druckverlust eine optimale Querverteilung der Gasströmung. Auf der der Fläche 4 abgekehrten Seite 9 des im Querschnitt T-förmigen Grundkörpers sind die Gaszuführungen in Form von Bohrungen vorgesehen, wobei durch die dargestellte Bohrung 10 Wasserstoff durchtritt und durch die nach beiden Seiten offene Kammer 11 im zusammengebauten Zustand vom Grundkörper 1 und Seitenplatten 6 zu den Stegen 7 gelangt.

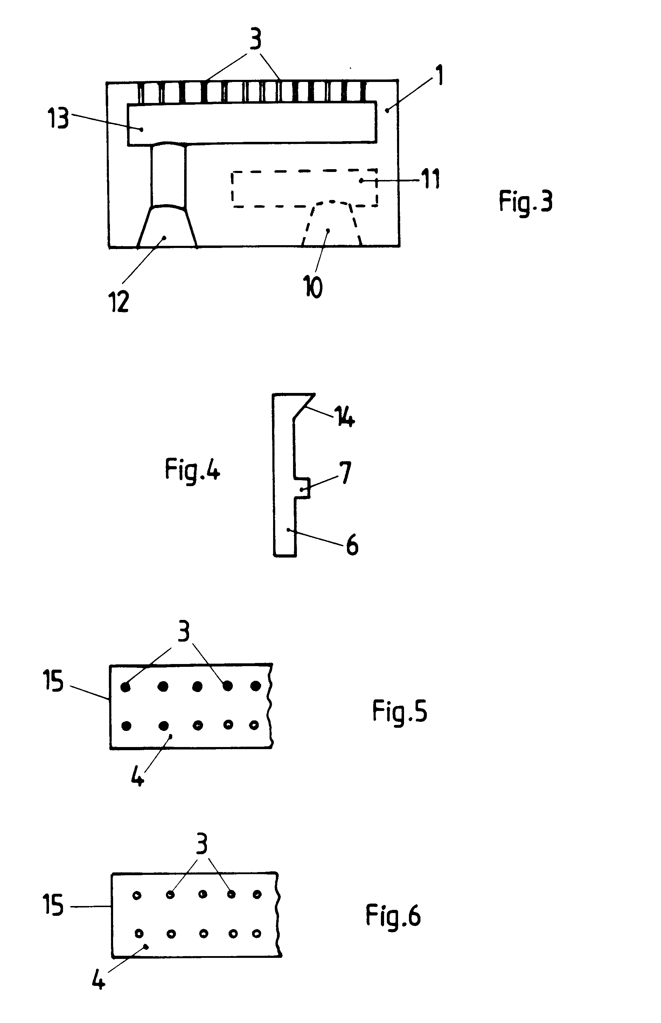

Die Anordnung der Bohrungen und Kammern im Grundkörper 1 verdeutlicht in einem Schnitt die Fig. 3. Wie bereits anhand der Fig. 2 beschrieben, endet die Bohrung 10 für die Wasserstoffzufuhr in der Kammer 11. Die zweite Bohrung 12 dient der Zuführung des Sauerstoffes, dieser gelangt in die Kammer 13, die in einer zur Kammer 11 versetzten Ebene angeordnet ist und an der sich die Bohrungen 3 anschließen, durch die der Sauerstoff zu der ebenen Fläche 4 gelangt und die gleichzeitig Düsenfunktion ausüben. Wie bereits angedeutet, sind die Zufuhr- und Verteilungsbohrungen für die Gaskomponenten sowie die Kammern großvolumig ausgeführt, um einen möglichst geringen und für alle Bohrungen 3 bzw. die Schlitze 2 gleichmäßigen Druckverlust zu erzeugen.

Die Fig. 4 zeigt noch einmal eine in den Grundkörper 1 integrierbare Seitenplatte 6 im Querschnitt mit einem mittleren Steg 7 zur Beschleunigung des in Pfeilrichtung strömenden Wasserstoffgases sowie einer zur Oberkante der Seitenplatte schräg zulaufenden Begrenzungsfläche 14.

Um eine konstante Betriebstemperatur über die gesamte durch den rechteckförmigen Brennerkopf erzeugte Plateaubreite sicherzustellen, sind die Bohrungen 3 in Durchführung der Erfindung nicht in gleichmäßigen Abständen voneinander angeordnet. Wie die Figuren 5 und 6 in zwei möglichen Varianten erkennen lassen, werden vielmehr die Abstände von innen nach außen gehend zunächst vergrößert, um dann an den Kanten wieder kleinere Werte anzunehmen. So zeigt die Fig. 5 die obere ebene Fläche eines Brennerkopfes nach der Erfindung, bei dem die Bohrungen 3 mit einem Bohrungsdurchmesser von z. B. 1,0 mm in zwei Reihen angeordnet sind, wobei der Reihenabstand 5 mm betragen soll. Wesentlich hier ist, daß zur Erzielung einer konstanten Betriebstemperatur über den ganzen Flächenbereich die Abstände jeweils zweier in einer Reihe befindlicher Bohrungen 3,3 mm beträgt und dann auf jeweils 4,5 mm zu den Außenkanten 15 hin ansteigt. Der Abstand zwischen der letzten Bohrung 3 und der Außenkante 15 beträgt dann nur noch 2 mm.

Eine andere Möglichkeit zeigt die Fig. 6, bei der z. B. Bohrungen 3 mit einem Durchmesser von 1,04 mm in dem Grundkörper angeordnet sind, die in der ebenen Fläche 4 gut fluchtend und ohne Abrißkanten enden. Der Abstand der Bohrungen 3 in den beiden Reihen beginnt zunächst mit 3 mm und steigt dann zu den Außenkanten 15 hin auf 4 mm an, während der Abstand der jeweils letzten Bohrung zur Außenkante 15 nur 3 mm beträgt.

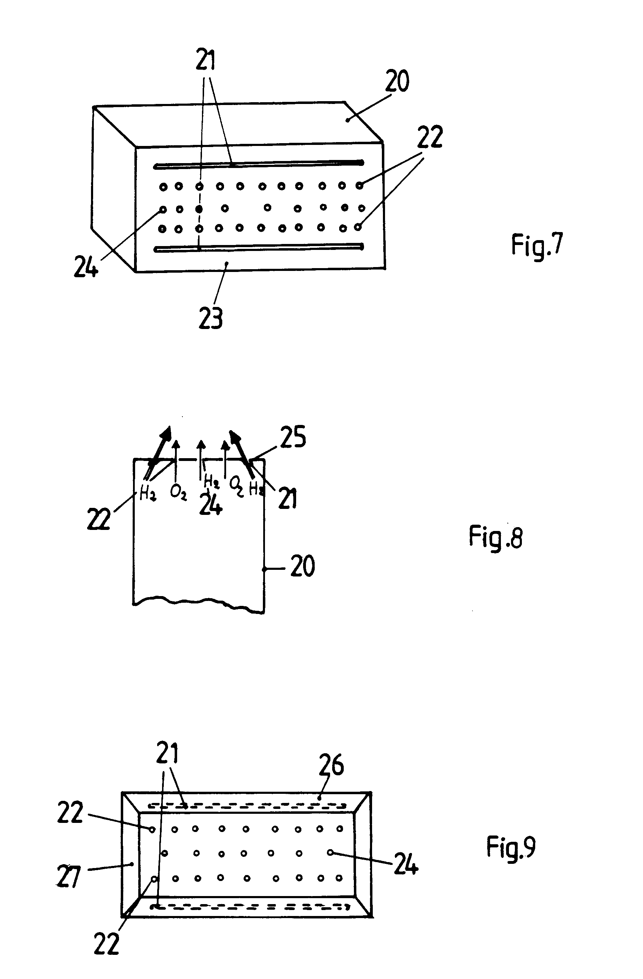

Die Fig. 7 zeigt einen erfindungsgemäßen Brennerkopf 20 in perspektivischer Ansicht, der beispielsweise mit Wasserstoff ($H_2$) und Sauerstoff ($O_2$) betrieben wird. Als Gasauslaßdüsen für den Wasserstoff sind die längs verlaufenden Schlitze 21 vorgesehen, während der Sauerstoff durch die zwischen den Schlitzen in Längsrichtung hintereinander angeordneten Bohrungen 22 austritt. Der Wasserstoff wird in den Sauerstoff eingemischt, so daß oberhalb der allen Düsen gemeinsamen Ebene 23 das zündfähige Gasgemisch entsteht. Durch die Anordnung der als Schlitze 21 und Bohrungen 22 ausgebildeten Düsen entsteht ein rechteckförmiges homogenes Flammenprofil mit sprunghaft abfallender Temperatur an den Grenzen. Durch die als Auslaßdüsen für den Sauerstoff angeordneten Bohrungen, die gut fluchtend hergestellt und mit hoher Oberflächengüte und ohne Abrißkanten gefertigt werden können, ist ein hoher Impulsstrom des Sauerstoffes möglich, dessen Einzelstrahlen maßgeblich an dem Mischvorgang zwischen Wasserstoff und Sauerstoff beteiligt sind.

Eine weitere Konzentration des aus den Düsen austretenden Wasserstoffes bzw. Sauerstoffes in der Strömungszone kann nun gemäß der Erfindung dadurch erreicht werden, daß zwischen den Bohrungen 22 für den Sauerstoff eine Reihe weiterer Bohrungen 24 für den Wasserstoff angeordnet ist. Ungenutzt kann Wasserstoff merklich nach außen nicht mehr abströmen, die der Brennerflamme nunmehr konzentriert angebotene Energie aus Wasserstoff und Sauerstoff führt zu einer Erhöhung der Flammentemperatur und einer Vergleichmäßigung des Temperaturprofils, insbesondere des Temperaturplateaus.

In der Fig. 8 ist schematisch der Strömungsverlauf der vorzugsweise verwendeten Gase Wasserstoff und Sauerstoff bei einem Brennerkopf nach der Erfindung dargestellt. Der Brennerkopf 20 weist wiederum die längsverlaufenden Schlitze 21 und die Bohrungen 22 bzw. die zusätzlichen Bohrungen 24 zwischen den beiden Reihen der Bohrungen 22 auf. Durch die Längsschlitze 21 strömt Wasserstoff, der durch längsverlaufende Schrägen 25 noch innerhalb des Brennerkörpers in Richtung aus den Bohrungen 22 austretenden Sauerstoff umgelenkt wird. Durch Pfeile ist die Strömungsrichtung markiert, wobei die verstärkt gezeichneten Pfeile des aus den Längsschlitzen 21 austretenden Wasserstoffes gleichzeitig eine Aussage über die Durchflußmenge treffen. So beträgt im dargestellten Ausführungsbeispiel von der benötigten Wasserstoffmenge überhaupt der Anteil des durch die Schlitze 21 strömenden Sauerstoffes beispielsweise 90 % während der durch die Bohrungen 24 durchströmende Wasserstoff lediglich 10 % ausmacht. Überwiegend holt sich der mit hoher Geschwindigkeit austretende Sauerstoff also die benötigte Wasserstoffmenge von den Seiten her, eine zusätzliche, konzentrierte Vermischung erfolgt aber gleichzeitig im mittleren Bereich des nach der Erfindung ausgebildeten Brennerkopfes.

Die Fig. 9 schließlich verdeutlicht eine Variante, bei der zusätzlich oder statt der im Innern des Brennerkopfes angeordneten Schrägen 25 äußere Umlenkkanten 26 in der Längsrichtung und oberhalb der Schlitze 21 verlaufend sowie entsprechende Elemente 27 quer hierzu angeordnet sind. Der weitgehend zentral aus den Bohrungen 22 austretende Sauerstoff saugt den Wasserstoff sowohl aus den Schlitzen 21 als auch aus den Bohrungen 24 in das Flammenprofil des Brenners konzentriert nach.

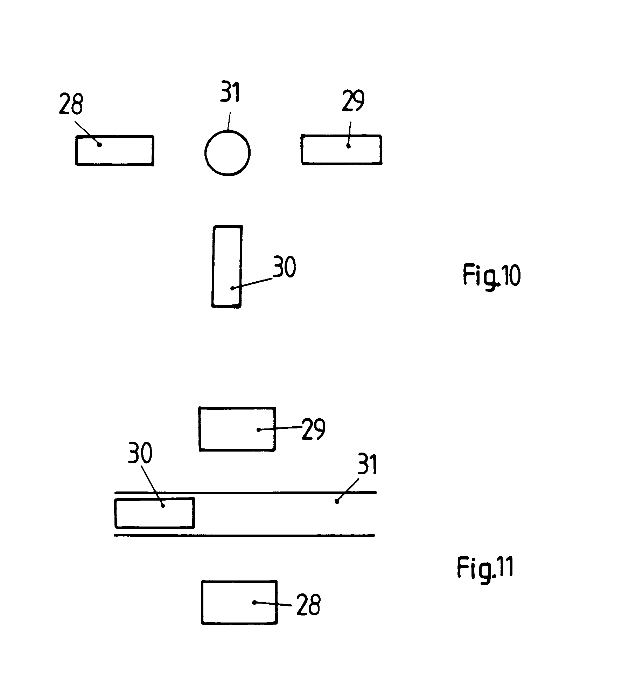

Die Eigenschaften des in der Fig. 1 erläuterten Brennerkopfes macht sich die Erfindung zunutze, wenn es darum geht, ein an das ideale Temperaturprofil bei der Wärmebehandlung eines Glasrohres zum Innenbeschichten von aus der Gasphase abgeschiedenen Glaspartikeln angeglichenes Temperaturprofil zu erreichen. So zeigt die Fig. 10 insgesamt drei Brennerköpfe 28, 29 und 30, von denen, wie diese Figur zeigt, die Brennerköpfe 28 und 29 seitlich zum zu behandelnden Rohr 31 angeordnet sind, während der Brennerkopf 30 mit seinen Düsen von unten her gegen das Glasrohr gerichtet ist. Die durch die rechteckförmige Ausbildung der Brennerköpfe bestimmten Flammenprofile lassen so eine optimale Temperaturabgrenzung im Behandlungsbereich des Rohres zu, es reicht bereits eine geringere Anzahl Brennerköpfe aus, im Behandlungsbereich des Rohres die notwendigen Temperaturen über die Betriebsdauer sicherzustellen. Die Längsgleichmäßigkeit des Niederschlages wird verbessert, die Abscheiderate insgesamt durch eine konstante Temperaturprofilcharakteristik erhöht.

In Ergänzung zur Fig. 10 zeigt die Fig. 11 in einer anderen Ansicht die Anordnung der drei Brennerköpfe 28, 29 und 30 zum Glasrohr 31. Aus dieser Figur ist ersichtlich, daß die Schmalseiten der Brennerköpfe 28 und 29 in einer quer zur Längsrichtung des Rohres 31 weisenden Ebene liegen, um die gewünschte Trennschärfe des Flammenprofils zu sichern. Der Brennerkopf 30 ist in Richtung der Rohrachse in Richtung auf die einströmenden Gase, aus denen die Glaspartikel abgeschieden werden, verschoben. Diese Vorverschiebung des Brennerkopfes 30 gegenüber den Brennerköpfen 28 und 29 führt dazu, daß der beaufschlagte Bereich des Glasrohres 31 mit steilem Temperaturgradienten aufgeheizt wird, während durch den Brennerkopf 30 die Rohrtemperatur gehalten sowie die einströmenden Gase vorgewärmt werden. Diese Vorwärmung mittels des scharf umrissenen Flammenprofils führt zu einer gegenüber bisherigen Möglichkeiten wesentlichen Steigerung des Chemikalienumsatzes im Rohr sowie des Abscheidewirkungsgrades (Thermophorese). Darüberhinaus bewirkt die dargestellte Brennerkopfanordnung in Bezug auf das zu behandelnde Glasrohr 31 eine Vergleichmäßigung der Temperaturverteilung, Unregelmäßigkeiten im Temperaturverlauf werden vermieden, so daß in Anlehnung an das im Hauptpatent dargestellte Temperaturprofil mit einer weiteren Annäherung an das ideale Temperaturprofil bei der Innenbeschichtung von Glasrohren zur Herstellung von Vorformen für Glasfasern gearbeitet werden kann.

**Patentansprüche**

1.   Brennerkopf für Gasbrenner mit einer Anzahl Gasauslaßdüsen zur Temperaturbehandlung von Profilen, insbesondere zur Temperaturbehandlung von langgestreckten Profilen, bei der eine Relativbewegung zwischen diesen und dem Brennerkopf stattfindet, dadurch gekennzeichnet, daß die Gasauslaßdüsen in einer allen Düsen gemeinsamen Ebene enden, in der durch die räumliche Zuordnung der Düsenauslässe zueinander von diesen ein rechteckförmiges Flächenstück der Ebene erfaßt wird.

**2.** Brennerkopf nach Anspruch 1, der von einem Gasgemisch gespeist wird, dadurch gekennzeichnet, daß die Gasauslaßdüsen für die Mischungskomponenten unterschiedliche geometrische Formen und/oder Abmessungen mindestens im Gasauslaßbereich aufweisen.

**3.** Brennerkopf nach Anspruch 1 oder 2, dadurch gekennzeichnet, daß als äußere Längsbegrenzung des Flächenstückes Gasauslaßdüsen in Form von Schlitzen für die eine Mischungskomponente dienen, zwischen denen Bohrungen als Gasauslaßdüsen für die zweite Mischungskomponente angeordnet sind.

**4.** Brennerkopf nach Anspruch 1 oder einem der folgenden, gekennzeichnet durch einen Grundkörper mit Bohrungen als Gasauslaßdüsen und zwei gesonderten Seitenteilen, die mit dem Grundkörper im zusammengefügten Zustand zwischen sich und der korrespondierenden Fläche des Grundkörpers die schlitzförmigen Gasauslaßdüsen einschließen.

**5.** Brennerkopf nach Anspruch 4, dadurch gekennzeichnet, daß Grundkörper und Seitenteile miteinander verschweißt sind.

**6.** Brennerkopf nach Anspruch 1 oder einem der folgenden, dadurch gekennzeichnet, daß die Bohrungen in Reihen parallel zu den seitlichen Schlitzen angeordnet sind.

**7.** Brennerkopf nach Anspruch 6, dadurch gekennzeichnet, daß die Teilung der Bohrungen in Längsrichtung unterschiedlich ist.

**8.** Brennerkopf nach Anspruch 7, dadurch gekennzeichnet, daß die Abstände zwischen je zwei Bohrungen von der Mitte der Längsschlitze aus gesehen zunächst zu- und zum Ende der Längsschlitze hin wieder abnehmen.

**9.** Brennerkopf nach Anspruch 1 oder einem der folgenden, dadurch gekennzeichnet, daß der Grundkörper ein im Querschnitt T-förmiges Profil aufweist, in dessen beiderseitige Ausnehmungen die als Platten ausgebildeten Seitenteile zur Vervollständigung eines im Querschnitt rechteckförmigen Brennerkopfes integrierbar sind.

**10.** Brennerkopf nach Anspruch 1 oder einem der folgenden, dadurch gekennzeichnet, daß die an der der Düsenaustrittsfläche gegenüberliegenden Seite des Brennerkopfes angeordneten Zuführungen für die Mischungskomponenten in gegenüber den Abmessungen der Schlitze und Bohrungen großvolumigen Kammern enden, von denen aus die Bohrungen und Schlitze weiterführen.

**11.** Brennerkopf nach Anspruch 1 oder einem der folgenden, dadurch gekennzeichnet, daß die als Platten ausgebildeten Seitenteile einen längs verlaufenden Steg aufweisen, der durch Zusammenfügen des jeweiligen Seitenteiles mit dem Grundkörper eine obere und eine untere Kammer für die eine Mischungskomponente bildet, wobei die räumliche Verbindung zwischen den beiden Kammern durch einen zwischen Steg und Grundkörper verbleibenden längsverlaufenden Schlitz erfolgt.

**12.** Brennerkopf nach Anspruch 1 oder einem der folgenden, dadurch gekennzeichnet, daß die Austrittsquerschnitte der Düsen für den Wasserstoff und den Sauerstoff so gewählt sind, daß sich ein Geschwindgkeitsverhältnis $H_2/O_2$ = 1/3 ergibt.

**13.** Brennerkopf nach Anspruch 1 oder einem der folgenden, dadurch gekennzeichnet, daß zwischen den Bohrungen für die zweite Mischungskomponente mindestens eine Reihe weiterer Gasauslaßdüsen für die erste Mischungskomponente des Gasgemisches angeordnet ist.

**14.** Brennerkopf nach Anspruch 13, dadurch gekennzeichnet, daß die Gasauslaßdüsen Bohrungen sind.

**15.** Brennerkopf nach Anspruch 13, dadurch gekennzeichnet, daß die Gasauslaßdüsen Schlitze in durchgehender oder unterbrochener Form sind.

**16.** Brennerkopf nach Anspruch 1 oder einem der folgenden mit Bohrungen für die Gasauslaßdüsen, dadurch gekennzeichnet, daß die Abstände der Bohrungen für die erste Mischungskomponente untereinander von denen der Bohrungen für die zweite Mischungskomponente unabhängig sind.

**17.** Brennerkopf nach Anspruch 1 oder einem der folgenden, dadurch gekennzeichnet, daß die weiteren Gasauslaßdüsen für die erste Mischungskomponente am der Austrittsebene abgekehrten Ende in einer großvolumigen Kammer für die erste Mischungskomponente enden.

18. Brennerkopf nach Anspruch 1 oder einem der folgenden, dadurch gekennzeichnet, daß im Bereich der Gasauslaßdüsen gesonderte Umlenkflächen für den Gasstrom vorgesehen sind.

19. Brennerkopf nach Anspruch 1 oder einem der folgenden, dadurch gekennzeichnet, daß die weiteren Gasauslaßdüsen von gesonderten, an den Brennerkopf anschließbaren Gaszuführungsleitungen gespeist werden.

20. Brennerkopf nach Anspruch 1 oder einem der folgenden, dadurch gekennzeichnet, daß die weiteren Gasauslaßdüsen von den gleichen Gaszuführungsleitungen wie die schlitzförmigen Gasauslaßdüsen gespeist werden, wobei die Aufteilung der beiderseitigen Gasströmungen in Innern des Brennerkopfes erfolgt.

21. Verwendung von Brennerköpfen nach Anspruch 1 oder einem der folgenden bei der Herstellung einer Vorform für Glasfaser-Lichtwellenleiter mit einem Kern und einem ein- oder mehrschichtigen Mantel zur Erzeugung eines rechteckförmigen Flammenprofils.

22. Anordnung nach Anspruch 21, dadurch gekennzeichnet, daß von den Brennerköpfen innerhalb des Brenners von insgesamt drei je zweiseitlich zur Vorform sowie einander gegenüber und einer unterhalb der Vorform angeordnet ist, wobei die Brennflächen in Achsrichtung des Rohres verlaufen und rechteckförmig ausgebildet sind.

23. Anordnung nach Anspruch 22, dadurch gekennzeichnet, daß der unterhalb des Rohres angeordnete Brenner in Achsrichtung vor den beiden seitlichen Brennern angeordnet ist.

24. Anordnung nach Anspruch 22 oder 23, dadurch gekennzeichnet, daß die in Achsrichtung einander zugekehrten Kanten der Brennerköpfe in einer Ebene liegen.

Fig.1

Fig.2

Fig.3

Fig.4

Fig.5

Fig.6

Fig.7

Fig.8

Fig.9

28

31

29

30

**Fig.10**

29

30

31

28

**Fig.11**